# EUROPEAN PATENT APPLICATION

(11) **EP 4 760 832 A1**
(43) Date of publication of application: **17.06.2026**
(21) Application number: 24854345.6
(22) Date of filing: 29.07.2024
(51) Int. Cl.: H01M 10/04, H01M 50/531, H01M 10/0585, H01M 50/273, H01M 50/22, H01M 50/262

(54) **BIPOLAR BATTERY AND MANUFACTURING METHOD THEREFOR**

(30) Priority: 11.08.2023 KR 20230105383
(71) Applicant: SK On Co., Ltd., Seoul 03161 (KR)
(72) Inventor: LEE, Seok Hee, Daejeon 34124 (KR)
(74) Representative: Stolmár & Partner Patentanwälte PartG mbB
(86) International application number: PCT/KR2024/011017
(87) International publication number: WO 2025/037793

(57) **Abstract**

According to an embodiment of the present disclosure, a bipolar battery comprising: a frame extending in a first direction and a second direction and partitioning a plurality of regions; and unit cells respectively disposed in the plurality of regions, each of the unit cells including a first electrode, a solid electrolyte, and a second electrode stacked in a third direction, wherein unit cells adjacent to each other in the first direction are each arranged such that the first electrodes and the second electrodes are alternately positioned at both ends in the third direction, wherein the unit cells adjacent to each other in the first direction are electrically connected to each other in series, wherein the first electrodes of the unit cells positioned at one end in the first direction are electrically connected to each other along the second direction, wherein the second electrodes of the unit cells positioned at the other end in the first direction are electrically connected to each other along the second direction, and wherein the first direction, the second direction, and the third direction may be orthogonal to each other.

## Description

### [Technical Field]

Embodiments of the present disclosure relate to a bipolar battery and a method of manufacturing the same.

### [Background Art]

Embodiments of the present disclosure provide a bipolar battery and a method of manufacturing the same, capable of freely improving output voltage and energy density.

The bipolar battery according to one embodiment of the present disclosure may be widely applied to green technology fields such as electric vehicles, battery charging stations, and other battery-utilizing solar power generation and wind power generation.

The bipolar battery according to one embodiment of the present disclosure may be widely applied to green technology fields such as electric vehicles, battery charging stations, and other battery-utilizing solar power generation and wind power generation.

### [Disclosure]

### [Technical Problem]

Embodiments of the present disclosure provide a bipolar battery and a method of manufacturing the same, capable of freely improving output voltage and energy density.

The bipolar battery according to one embodiment of the present disclosure may be widely applied to green technology fields such as electric vehicles, battery charging stations, and other battery-utilizing solar power generation and wind power generation.

### [Technical Solution]

According to one embodiment of the present disclosure, a bipolar battery may comprise: a frame extending in a first direction and a second direction and partitioning a plurality of regions; and unit cells respectively disposed in the plurality of regions, each of the unit cells including a first electrode, a solid electrolyte, and a second electrode stacked in a third direction, wherein unit cells adjacent to each other in the first direction are each arranged such that the first electrodes and the second electrodes are alternately positioned at both ends in the third direction, wherein the unit cells adjacent to each other in the first direction are electrically connected to each other in series, wherein the first electrodes of the unit cells positioned at one end in the first direction are electrically connected to each other along the second direction, wherein the second electrodes of the unit cells positioned at the other end in the first direction are electrically connected to each other along the second direction, and wherein the first direction, the second direction, and the third direction may be orthogonal to each other.

In one embodiment, the bipolar battery may further include: a first electrode tab electrically connecting the first electrodes of the unit cells positioned at one end in the first direction to each other; and a second electrode tab electrically connecting the second electrodes of the unit cells positioned at the other end in the first direction to each other.

In one embodiment, a length of the solid electrolyte in the first direction may be longer than the first electrode and the second electrode.

In one embodiment, a height of the frame in the third direction may be equal to or less than a height of the unit cells in the third direction.

In one embodiment, the unit cells adjacent to each other in the first direction may have the first electrode and the second electrode at an upper end electrically connected to each other, or the first electrode and the second electrode at a lower end electrically connected to each other.

In one embodiment, the bipolar battery may further include an upper cover disposed at one end of the unit cells and the frame in the third direction and including an insulating material.

In one embodiment, the frame may include: a lower plate on which the unit cells are disposed on one surface in the third direction; and a first partition wall portion extending from the lower plate in the third direction, partitioning the plurality of regions, and electrically insulating the unit cells from each other in the first direction and the second direction.

In one embodiment, the upper cover may include: an upper plate disposed at one end of the unit cells in the third direction; and a second partition wall portion extending from the upper plate in the third direction and connected to the first partition wall portion.

In one embodiment, in each of the unit cells, the first electrode and the second electrode may be respectively positioned at both ends in the third direction, and the solid electrolyte may be positioned between the first electrode and the second electrode.

In one embodiment, the unit cell may include, between the first electrode and the second electrode, one or more bipolar electrodes including a bipolar current collector, a first active material layer formed on one surface of the bipolar current collector, and a second active material layer formed on another surface of the bipolar current collector.

In one embodiment, the frame may include an insulating material.

In one embodiment, the frame may include an elastic material.

In one embodiment, the frame may include one or more materials selected from the group consisting of polyurethane, natural rubber, spandex, butyl rubber (isobutylene isoprene rubber, IIR), fluoroelastomer, elastomer, ethylene-propylene rubber (EPR), styrene-butadiene rubber (SBR), chloroprene, elastin, epichlorohydrin rubber, nylon, terpene, isoprene rubber, polybutadiene, nitrile rubber, thermoplastic elastomer, silicone rubber, ethylene-propylene-diene rubber (EPDM), ethylene vinyl acetate (EVA), halogenated butyl rubber, neoprene, and copolymers thereof.

In one embodiment, the bipolar battery may further include a fixing portion in which the frame and the upper cover are coupled and fixed.

In one embodiment, the frame and the upper cover may be opened and closed relative to each other about the fixing portion as an axis.

A method of manufacturing a bipolar battery according to one embodiment of the present disclosure may comprise: disposing unit cells in a plurality of regions partitioned by a frame extending in a first direction and a second direction; serially connecting unit cells adjacent to each other in the first direction; and electrically connecting first electrodes of the unit cells positioned at one end in the first direction to each other along the second direction, and electrically connecting second electrodes of the unit cells positioned at the other end in the first direction to each other along the second direction, wherein the unit cells include a first electrode, a solid electrolyte, and a second electrode stacked in a third direction, wherein the unit cells adjacent to each other in the first direction are each arranged such that the first electrodes and the second electrodes are alternately positioned at both ends in the third direction, and wherein the first direction, the second direction, and the third direction may be orthogonal to each other.

In one embodiment, the step of serially connecting the unit cells adjacent to each other in the first direction may include: electrically connecting the first electrode and the second electrode positioned at an upper end of the unit cells adjacent to each other in the first direction; or electrically connecting the first electrode and the second electrode positioned at a lower end of the unit cells adjacent to each other in the first direction.

In one embodiment, the method of manufacturing the bipolar battery may further include coupling an upper cover including an insulating material to one end of the unit cells and the frame in the third direction.

In one embodiment, the step of disposing the unit cells may include: disposing a conductive wire on the frame; and disposing the unit cells in the plurality of regions such that one end of the unit cells in the third direction is in contact with the conductive wire.

In one embodiment, the step of disposing the unit cells may further include insulating portions of the conductive wire that do not contact the unit cells.

### [Advantageous Effects]

According to the embodiments of the present disclosure, a bipolar battery and a method of manufacturing the same, capable of freely improving output voltage and energy density, can be provided.

### [Description of Drawings]

FIG. 1 is a diagram for explaining one example of a unit cell included in a bipolar battery according to an embodiment of the present disclosure.
FIG. 2 is a diagram for explaining another example of a unit cell included in a bipolar battery according to an embodiment of the present disclosure.
FIG. 3 is a perspective view for explaining a frame included in a bipolar battery according to an embodiment of the present disclosure.
FIG. 4 is a cross-sectional view of the frame of FIG. 3 as viewed in an A direction.
FIG. 5 is a diagram for explaining serial connection of unit cells included in a bipolar battery according to an embodiment of the present disclosure.
FIG. 6 is a diagram for explaining a bipolar battery in which unit cells serially connected to each other are disposed in a frame according to an embodiment of the present disclosure.
FIG. 7 is a diagram for explaining parallel connection of unit cells included in a bipolar battery according to an embodiment of the present disclosure.
FIG. 8 is a plan view of a bipolar battery according to an embodiment of the present disclosure as viewed from above.
FIG. 9 is a diagram for explaining an upper cover of a bipolar battery according to an embodiment of the present disclosure.
FIG. 10 is a perspective view of the upper cover of FIG. 9 as viewed in a B direction.
FIG. 11 is a plan view of a bipolar battery with an upper cover coupled thereto according to one embodiment of the present disclosure, as viewed from above.
FIG. 12 is a perspective view for explaining a bipolar battery according to another embodiment of the present disclosure.
FIG. 13 is a flowchart for explaining a method of manufacturing a bipolar battery according to an embodiment of the present disclosure.

### [Modes of the Invention]

Structural or functional descriptions of the embodiments disclosed in the present specification or application are exemplified merely for the purpose of describing embodiments according to the technical idea of the present invention, and embodiments according to the technical idea of the present invention may be implemented in various forms other than the embodiments disclosed in the present specification or application, and the technical idea of the present invention should not be construed as being limited to the embodiments described in the present specification or application.

Hereinafter, unless otherwise defined in the present specification, when a layer, film, thin film, region, plate, or the like is described as being "on" or "over" another part, this includes not only a case where it is "directly on" the other part, but also a case where another part is interposed therebetween.

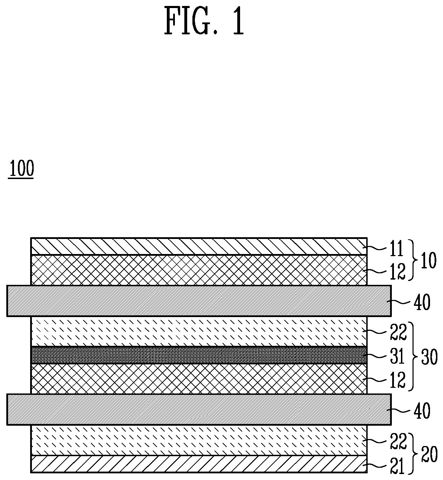

FIG. 1 is a diagram for explaining one example of a unit cell included in a bipolar battery according to an embodiment of the present disclosure.

Referring to FIG. 1, a unit cell 100 of a bipolar battery may include a first electrode 10, a second electrode 20, a bipolar electrode 30, and a solid electrolyte layer 40.

The first electrode 10 may include a first current collector 11 and a first active material layer 12.

Any material having conductivity and capable of forming the first active material layer 12 on one surface thereof is not particularly limited and may be used as the first current collector 11. For example, the first current collector 11 may include one or more selected from the group consisting of stainless steel, aluminum, copper, and nickel. In addition, the first current collector 11 may have a form in which carbon is coated on a surface of stainless steel, aluminum, copper, nickel, or the like described above.

The thickness of the first current collector 11 may be appropriately selected depending on the use of the bipolar battery, but may generally be in a range of 1 µm to 100 µm, and specifically may be in a range of 5 µm to 50 µm. When the thickness of the first current collector 11 is thin, occurrence of a short circuit due to breakage can be further prevented. In addition, the shape of the first current collector 11 may be appropriately selected depending on the use of the bipolar battery. In one embodiment, the first current collector 11 may be a positive electrode current collector.

The first active material layer 12 may be formed on one surface of the first current collector 11. In one embodiment, the first active material layer 12 may be a positive electrode active material layer. In this case, the first active material layer 12 may include a positive electrode active material. In the case of a bipolar lithium battery, the positive electrode active material may be a lithium oxide, for example, LiNiₓCo_{y}Mn_{z}O₂, LiNiₓCo_{y}Al_{z}O₂ where 0<x<1, 0<y<1, 0<z<1, and x+y+z = 1. In one embodiment, the lithium oxide may be LiCoO₂, LiMnO₂, Li₂NiMn₃O₈, LiVO₂, LiCrO₂, LiFePO₄, LiCoPO₄, LiNiO₂, LiNi_{1/3}Co_{1/3}Mn_{1/3}O₂, or the like, but is not limited thereto. In addition, the positive electrode active material may be in a single crystalline form or a polycrystalline form.

In addition, the first active material layer 12 may further include, as necessary, one or more selected from the group consisting of a conductive material, a solid electrolyte, and a binder. The conductive material is a material for improving conductivity, and may be, for example, acetylene black, Ketjen black, carbon fiber, graphene, carbon nanotubes, or the like. The solid electrolyte is for improving ionic conductivity of the positive electrode active material layer, and the same material as that described later with respect to the solid electrolyte layer 40 may be used. In addition, the binder may mediate bonding between the positive electrode current collector and the positive electrode active material layer to improve mechanical stability, and may be, for example, a fluorine-containing binder such as polytetrafluoroethylene (PTFE) or polyvinylidene fluoride (PVDF), or a rubber-based binder such as nitrile butadiene rubber (NBR) or styrene-butadiene rubber (SBR).

The method of forming the first active material layer 12 is not particularly limited as long as it is a method capable of forming the first active material layer 12 having a desired thickness in a desired region on a surface of the first current collector 11. For example, the first active material layer 12 may be formed by pressurizing and pressing a material of the first active material layer 12, or by preparing a slurry containing a material of the first active material layer 12 and a solvent and coating the slurry on the surface of the first current collector 11. Alternatively, in another embodiment, a method may also be considered in which the first active material layer 12 is first formed on the solid electrolyte layer 40 positioned below the first active material layer 12 in the unit cell 100, and then the first current collector 11 is disposed on the first active material layer 12.

The second electrode 20 may include a second current collector 21 and a second active material layer 22.

Any material having conductivity and capable of forming the second active material layer 22 on one surface thereof is not particularly limited and may be used as the second current collector 21. For example, the second current collector 21 may include one or more selected from the group consisting of stainless steel, aluminum, copper, and nickel. In addition, the second current collector 21 may have a form in which carbon is coated on a surface of stainless steel, aluminum, copper, nickel, or the like described above.

The thickness of the second current collector 21 may be appropriately selected depending on the use of the bipolar battery, but may generally be within a range of 1 µm to 100 µm, and specifically may be within a range of 5 µm to 50 µm. When the thickness of the second current collector 21 is thin, occurrence of a short circuit due to breakage can be further prevented. In addition, the shape of the second current collector 21 may be appropriately selected depending on the use of the bipolar battery. In one embodiment, the second current collector 21 may be a negative electrode current collector.

The second active material layer 22 may be formed on one surface of the second current collector 21. In one embodiment, the second active material layer 22 may be a negative electrode active material layer. In this case, the second active material layer 22 may include a negative electrode active material. The negative electrode active material may be, for example, a metal active material and a carbon active material, but is not limited thereto. The metal of the negative electrode active material may be, for example, In, Al, Si, Sn, or the like, and the carbon active material may be, for example, mesocarbon microbeads (MCMB), highly oriented pyrolytic graphite (HOPG), hard carbon, soft carbon, or the like, but is not limited thereto.

In addition, the second active material layer 22 may further include, as necessary, one or more selected from the group consisting of a conductive material, a solid electrolyte, and a binder, in the same manner as the first active material layer 12. Further, the second active material layer 22 may be manufactured in the same manner as described with respect to the first active material layer 12.

In an embodiment, polarities of the first electrode 10 and the second electrode 20 may be opposite to each other. In one embodiment, as described in the above example, when the first electrode 10 is a positive electrode, the second electrode 20 may be a negative electrode. In another embodiment, when the first electrode 10 is a negative electrode, the second electrode 20 may be a positive electrode.

The bipolar electrode 30 may include a bipolar current collector 31, a first active material layer 12, and a second active material layer 22.

Any material having conductivity and capable of forming the first active material layer 12 on one surface and the second active material layer 22 on another surface is not particularly limited and may be used as the bipolar current collector 31. For example, the bipolar current collector 31 may include one or more selected from the group consisting of stainless steel, aluminum, copper, and nickel. In another embodiment, the bipolar current collector 31 may have a form in which two or more selected from the group consisting of stainless steel, aluminum, copper, and nickel are bonded to each other. Since all of the descriptions provided with respect to the first current collector 11 and the second current collector 21 may be applied to the bipolar current collector 31, repeated description thereof will be omitted.

The first active material layer 12 may be formed on one surface of the bipolar current collector 31, and the second active material layer 22 may be formed on the other surface thereof. Since this has been described with respect to the first electrode 10 and the second electrode 20, repeated description thereof will be omitted.

In one embodiment, the first active material layer 12 of the first electrode 10 and the first active material layer 12 of the bipolar electrode 30 may include the same material. In another embodiment, the first active material layer 12 of the first electrode 10 and the first active material layer 12 of the bipolar electrode 30 may include different materials.

In one embodiment, the second active material layer 22 of the second electrode 20 and the second active material layer 22 of the bipolar electrode 30 may include the same material. In another embodiment, the second active material layer 22 of the second electrode 20 and the second active material layer 22 of the bipolar electrode 30 may include different materials.

The solid electrolyte layer 40 may include a solid electrolyte. The solid electrolyte layer 40 may be positioned between the first electrode 10 and the bipolar electrode 30, and between the second electrode 20 and the bipolar electrode 30. In one embodiment, when a plurality of bipolar electrodes 30 are provided, the solid electrolyte layer 40 may be positioned between each pair of bipolar electrodes 30. More specifically, the solid electrolyte layer 40 may be positioned between the first active material layer 12 and the second active material layer 22.

In an embodiment, a length of the solid electrolyte layer 40 in a direction perpendicular to a stacking direction of the unit cell 100 may be longer than the first electrode 10, the second electrode 20, and the bipolar electrode 30. Accordingly, as will be described later, when the unit cells 100 are disposed in a frame, short-circuiting between the unit cells 100 can be prevented.

The solid electrolyte layer 40 may include a solid electrolyte constituting the solid electrolyte layer 40. The solid electrolyte is not particularly limited as long as it has ionic conductivity. For example, when the bipolar battery is a bipolar lithium battery, the solid electrolyte may be an oxide-based amorphous solid electrolyte material such as Li₂O-B₂O₃-P₂O₅, Li₂O-SiO₂, Li₂O-B₂O₃, or Li₂O-B₂O₃-ZnO; a sulfide-based amorphous solid electrolyte material such as Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, Li₃PO₄-Li₂S-SiS, LiI-Li₂S-P₂O₅, LiI-Li₃PO₄-P₂S₅, or Li₂S-P₂S₅; a sulfide crystalline solid electrolyte material of an LPSCl-based series or an LGPS-based series such as Li3PS5Cl; a crystalline oxide or oxynitride such as LiI, LiI-Al₂O₃, Li₃N, Li₃N-LiI-LiOH, Li₁₊ₓAlₓTi₂₋ₓ(PO₄)₃ (0≤x≤2), Li_{1+x-y}AxTi₂₋ₓSi_{y}P₃₋yO₁₂ (A = Al or Ga, 0≤x≤0.4, 0<y≤0.6), [(A_{1/2}Li_{1/2})₁₋ₓBₓ]TiO₃ (A = La, Pr, Nd, Sm; B = Sr or Ba; 0≤x≤0.5), Li₅La₃Ta₂O₁₂, Li₇La₃Zr₂O₁₂, Li₆BaLa₂Ta₂O₁₂, Li₃PO_{(4-3/2x)}Nₓ (x<1), or Li_{3.6}Si_{0.6}P_{0.4}O₄; or a halide solid electrolyte material such as Li₃YCₗ₆ or Li₆PS₅C_{l0.5}Br_{0.5}, but is not limited thereto.

In another embodiment, the solid electrolyte may be a polymer electrolyte, and specifically may be a polymer gel electrolyte. The polymer gel electrolyte may be, depending on a manufacturing method, a form in which an electrolytic solution is swollen after manufacturing a polymer matrix (physical gel), or a form manufactured by curing a composition in which an electrolytic solution and a monomer are mixed (chemical gel). The polymer gel electrolyte includes an organic electrolytic solution including a lithium salt and a polymer resin, and the organic electrolytic solution may be included in an amount of 60 to 1000 parts by weight based on 100 parts by weight of the polymer resin. The polymer applied to the polymer gel electrolyte is not limited to a specific component, but may include, for example, a polyether-based polymer, a PVC-based polymer, a PMMA-based polymer, polyacrylonitrile (PAN), polyvinylidene fluoride (PVdF), poly(vinylidene fluoride-hexafluoropropylene) (PVdF-HFP), polyacrylate, polyethylene oxide, or a mixture thereof.

The lithium salt included in the polymer gel electrolyte is an ionizable lithium salt and may be expressed as Li⁺X⁻. An anion of such a lithium salt may be, for example, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF³⁻, (CF₃)₄PF²⁻, (CF₃)₅PF⁻, (CF₃)₆P⁻, CF₃SO³⁻, CF₃CF₂SO³⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO³⁻, CF₃CO²⁻, CH₃CO²⁻, SCN⁻, or (CF₃CF₂SO₂)₂N⁻, but is not limited thereto.

The solid electrolyte layer 40 may further include a binder in addition to the solid electrolyte. Here, the binder may be the same as the binder that may be included in the first active material layer 12 described above.

In one embodiment, a thickness of the solid electrolyte layer 40 may be in a range of 0.1 µm to 1000 µm, specifically in a range of 0.1 µm to 300 µm, and more specifically in a range of 0.1 µm to 200 µm.

The method of forming the solid electrolyte layer 40 is not particularly limited. For example, the solid electrolyte layer 40 may be formed by pressurizing and pressing a material of the solid electrolyte layer 40, by preparing a slurry containing a material of the solid electrolyte layer 40 and a solvent and coating the slurry on a current collector on which an electrode active material layer is formed, or by coating the slurry on a current collector, drying the same, and then manufacturing a free-standing film. In one embodiment, when a method of coating a slurry is used, it may be easier to form the solid electrolyte layer 40 so as to cover the electrode active material layer. Here, the electrode active material layer may be the first active material layer 12 or the second active material layer 22, and the current collector may be the first current collector 11, the second current collector 21, or the bipolar current collector 31.

As illustrated in FIG. 1, in the unit cell 100, a bipolar electrode 30 and a solid electrolyte layer 40 may be interposed between the first electrode 10 and the second electrode 20. In one embodiment, one or more bipolar electrodes 30 may be positioned between the first electrode 10 and the second electrode 20, and a plurality of solid electrolyte layers 40 may be positioned therebetween.

In an embodiment, the unit cell 100 may have a stacked structure in which the first electrode 10, the second electrode 20, one or more bipolar electrodes 30, and a plurality of solid electrolyte layers 40 are stacked. The first electrode 10 and the second electrode 20 may be positioned at both ends in the stacking direction of the unit cell 100. More specifically, the first current collector 11 and the second current collector 21 may be positioned at both ends in the stacking direction of the unit cell 100.

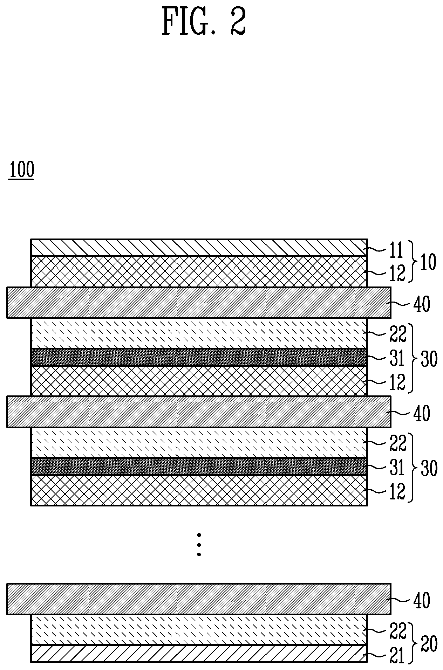

FIG. 2 is a diagram for explaining another example of a unit cell included in a bipolar battery according to an embodiment of the present disclosure.

Referring to FIG. 2, the unit cell 100 of the bipolar battery may include a plurality of bipolar electrodes 30. Solid electrolyte layers 40 may be positioned between the plurality of bipolar electrodes 30.

In one embodiment, the first active material layers 12 of each of the plurality of bipolar electrodes 30 may include the same material. In another embodiment, at least some of the first active material layers 12 of the plurality of bipolar electrodes 30 may include different materials.

In one embodiment, the second active material layers 22 of each of the plurality of bipolar electrodes 30 may include the same material. In another embodiment, at least some of the second active material layers 22 of the plurality of bipolar electrodes 30 may include different materials.

As the bipolar electrodes 30 having a stacked structure of the first active material layer 12, the bipolar current collector 31, and the second active material layer 22 are repeatedly disposed, the unit cell 100 may have a form in which a plurality of bipolar battery cells are connected in series.

By including a plurality of bipolar electrodes 30 as shown in FIG. 2, an output voltage of the entire bipolar battery can be increased.

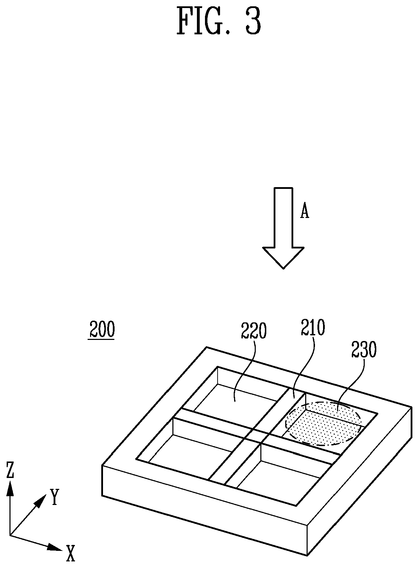

FIG. 3 is a perspective view for explaining a frame included in a bipolar battery according to an embodiment of the present disclosure.

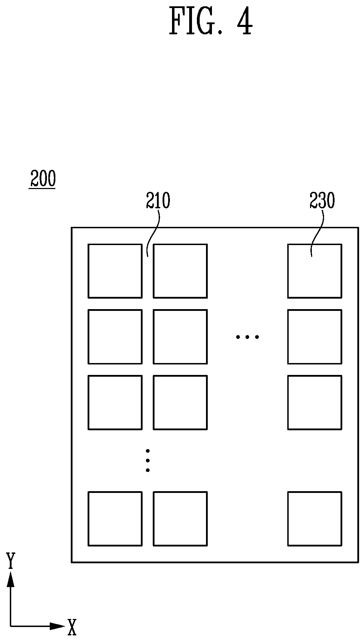

FIG. 4 is a cross-sectional view of the frame of FIG. 3 as viewed in an A direction.

Referring to FIGS. 1, 3, and 4, a frame 200 may extend in an x-axis direction and a y-axis direction to partition a plurality of regions 230. In an embodiment, the frame 200 may include a lower plate 220 at one end in a z-axis direction, and may include a first partition wall portion 210 extending in the x-axis direction and the y-axis direction on the lower plate 220.

In an embodiment, unit cells 100 in which a first electrode 10, a second electrode 20, and a solid electrolyte are stacked in the z-axis direction may be disposed on the lower plate 220. More specifically, the unit cells 100 may be disposed in the plurality of regions 230 partitioned by the first partition wall portion 210 extending in the x-axis direction and the y-axis direction. In the present specification, the x-axis direction may be defined as a first direction, the y-axis direction may be defined as a second direction, and the z-axis direction may be defined as a third direction. Accordingly, the first direction, the second direction, and the third direction may be orthogonal to each other.

In an embodiment, the frame 200 may include an insulating material. Accordingly, the frame 200 may electrically separate the unit cells 100. In an embodiment, the frame 200 may insulate unit cells 100 adjacent to each other in the x-axis direction and the y-axis direction from each other.

The frame 200 may include an elastic material. In one embodiment, pressure may be applied from the outside during operation of the bipolar battery, and the frame 200 including an elastic material may be appropriately compressed by the pressure from the outside and may normally separate the plurality of unit cells 100 without being damaged despite the external pressure.

The frame 200 may include, for example, one or more materials selected from the group consisting of polyurethane, natural rubber, spandex, butyl rubber (isobutylene isoprene rubber, IIR), fluoroelastomer, elastomer, ethylene-propylene rubber (EPR), styrene-butadiene rubber (SBR), chloroprene, elastin, epichlorohydrin rubber, nylon, terpene, isoprene rubber, polybutadiene, nitrile rubber, thermoplastic elastomer, silicone rubber, ethylene-propylene-diene rubber (EPDM), ethylene vinyl acetate (EVA), halogenated butyl rubber, neoprene, and copolymers thereof, but is not limited thereto. Alternatively, in another embodiment, the frame 200 may be a nonwoven fabric or a porous material, and may be, for example, a nonwoven fabric or sheet including one or more materials selected from the group consisting of an olefin-based porous material, glass fiber, and polyethylene.

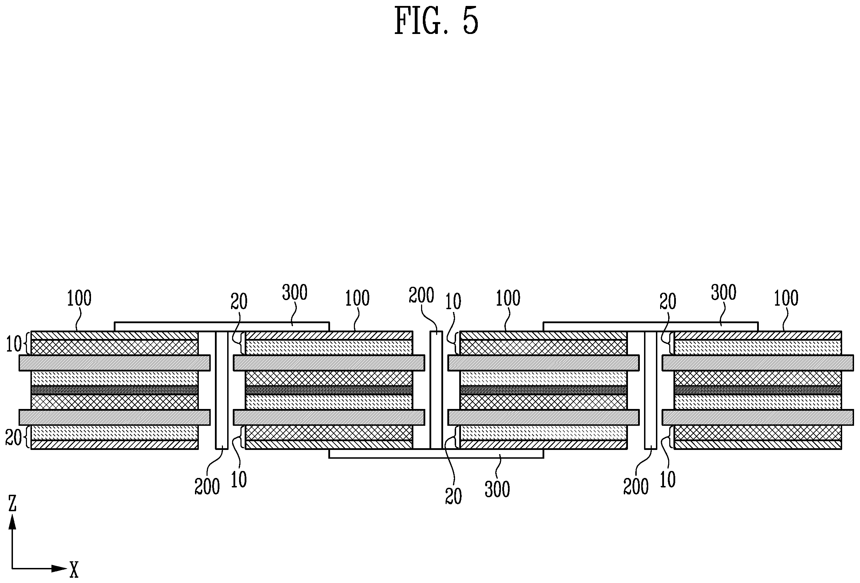

FIG. 5 is a diagram for explaining serial connection of unit cells included in a bipolar battery according to an embodiment of the present disclosure.

Referring to FIG. 5, in an embodiment, unit cells 100 adjacent to each other in the x-axis direction may be arranged such that first electrodes 10 and second electrodes 20 are alternately positioned at both ends in the z-axis direction. The unit cells 100 adjacent to each other in the x-axis direction may be electrically connected to each other in series. Accordingly, the first electrode 10 and the second electrode 20 of the unit cells 100 adjacent to each other in the x-axis direction may be electrically connected to each other. The first electrode 10 and the second electrode 20 of the unit cells 100 adjacent to each other in the x-axis direction may be electrically connected to each other through a conductive wire 300.

In one embodiment, the first electrode 10 and the second electrode 20 at an upper end of the unit cells 100 adjacent to each other in the x-axis direction may be electrically connected to each other, or the first electrode 10 and the second electrode 20 at a lower end of the unit cells 100 adjacent to each other in the x-axis direction may be electrically connected to each other. Here, the upper end and the lower end of the unit cell 100 may be both ends of the unit cell 100 in the z-axis direction.

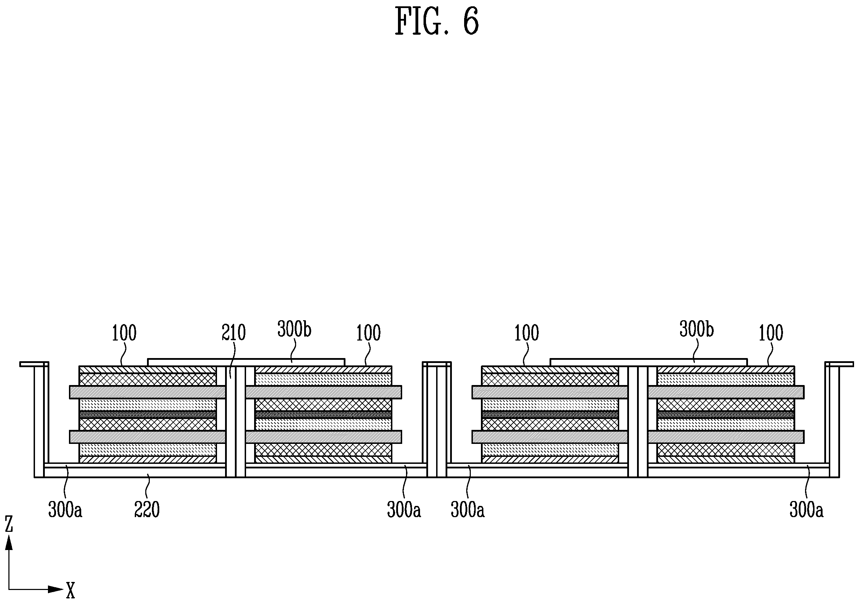

FIG. 6 is a diagram for explaining a bipolar battery in which unit cells serially connected to each other are disposed in a frame according to an embodiment of the present disclosure.

Referring to FIG. 6, unit cells 100 may be disposed in a plurality of regions partitioned by the frame 200. In an embodiment, unit cells 100 adjacent to each other in the x-axis direction may be arranged such that first electrodes 10 and second electrodes 20 are alternately positioned at both ends in the z-axis direction.

In one embodiment, the first electrode 10 and the second electrode 20 at a lower end of the unit cells 100 adjacent to each other in the x-axis direction may be electrically connected to each other by a first conductive wire 300a. In an embodiment, the first conductive wire 300a may be disposed in advance on the frame 200 before the unit cells 100 are disposed. In an embodiment, the first conductive wire 300a may be disposed to pass through the plurality of regions partitioned by the frame 200. Thereafter, the unit cells 100 may be disposed such that the lower ends of the unit cells 100 are in contact with the first conductive wire 300a. In one embodiment, an insulation process may be performed on the first conductive wire 300a before the unit cells 100 are disposed. For example, by disposing an insulating tape on at least a part of portions of the first conductive wire 300a that do not contact the unit cells 100, unintended short-circuiting can be prevented.

In one embodiment, the first electrode 10 and the second electrode 20 at an upper end of the unit cells 100 adjacent to each other in the x-axis direction may be electrically connected to each other by a second conductive wire 300b. In an embodiment, the second conductive wire 300b may be formed to be in contact with the upper ends of the unit cells 100 after the unit cells 100 are disposed.

In one embodiment, a height of the frame 200 in the z-axis direction may be equal to or less than a height of the unit cells 100 in the z-axis direction. More specifically, the height of the frame 200 in the z-axis direction may be equal to the height of the unit cells 100 in the z-axis direction. Accordingly, the unit cells 100 may be more stably disposed in the regions partitioned by the frame 200.

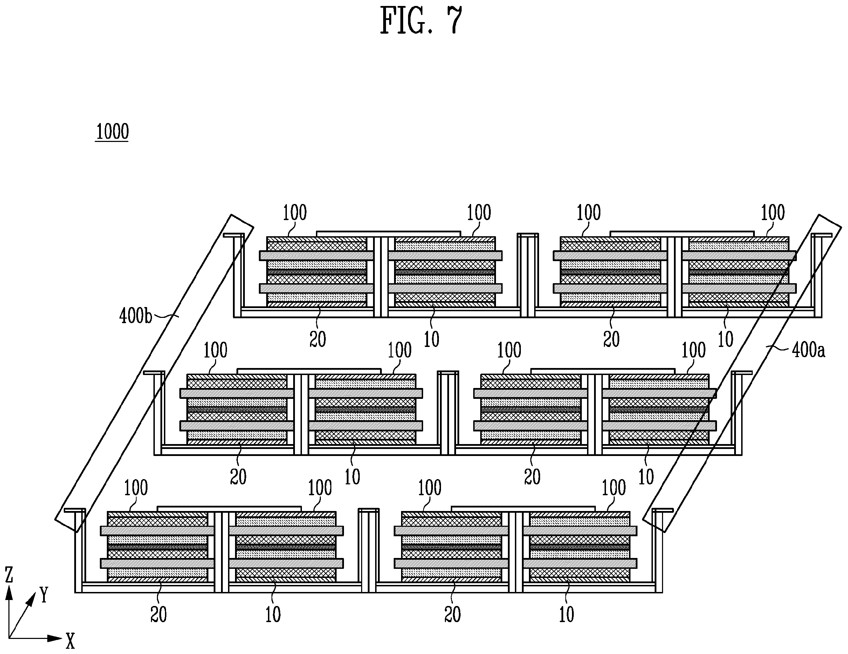

FIG. 7 is a diagram for explaining parallel connection of unit cells included in a bipolar battery according to an embodiment of the present disclosure.

Referring to FIGS. 6 and 7, in the bipolar battery 1000, first electrodes 10 of unit cells positioned at one end in the x-axis direction may be electrically connected to each other along the second direction. In an embodiment, through a first electrode tab 400a, the first electrodes 10 of the unit cells positioned at one end in the x-axis direction may be electrically connected to each other.

Second electrodes 20 of unit cells positioned at the other end in the x-axis direction may be electrically connected to each other along the second direction. In an embodiment, through a second electrode tab 400b, the second electrodes 20 of the unit cells positioned at the other end in the x-axis direction may be electrically connected to each other.

In one embodiment, as illustrated in FIGS. 6 and 7, the first electrodes 10 of the unit cells positioned at one end in the x-axis direction and the second electrodes 20 of the unit cells positioned at the other end in the x-axis direction may be connected to the first electrode tab 400a and the second electrode tab 400b, respectively, through the second conductive wire 300b.

In another embodiment, at least one of the first electrodes 10 of the unit cells positioned at one end in the x-axis direction and the second electrodes 20 of the unit cells positioned at the other end in the x-axis direction may be connected to the first electrode tab 400a and the second electrode tab 400b through the first conductive wire 300a.

Accordingly, a unit cell group composed of unit cells 100 arranged along the x-axis direction may be connected in parallel with each other along the y-axis direction.

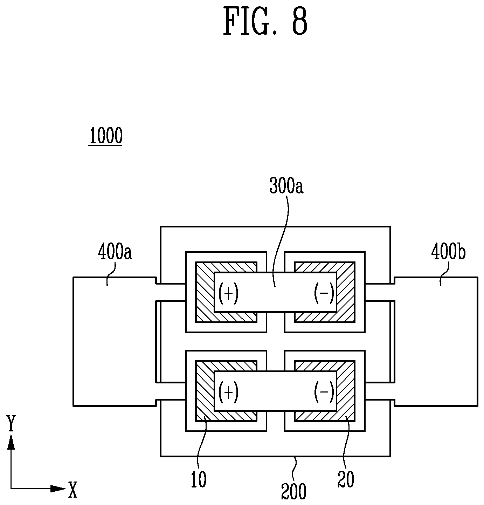

FIG. 8 is a plan view of a bipolar battery according to an embodiment of the present disclosure as viewed from above.

Referring to FIGS. 7 and 8, in the bipolar battery 1000, two unit cells 100 may be disposed adjacent to each other in the x-axis direction, and two unit cells 100 may be disposed adjacent to each other in the y-axis direction. However, the present disclosure is not limited thereto, and as shown in FIG. 7, a larger number of unit cells 100 than those illustrated in FIG. 8 may be disposed in the x-axis direction and the y-axis direction.

The unit cells 100 adjacent to each other in the x-axis direction may be electrically connected to each other through the first conductive wire 300a. However, when the number of unit cells 100 disposed in the x-axis direction increases, the unit cells 100 adjacent to each other in the x-axis direction may be serially connected by using both the first conductive wire 300a and the second conductive wire 300b.

The first electrodes 10 of the unit cells 100 positioned at one end in the x-axis direction may be electrically connected to each other along the y-axis direction through the first electrode tab 400a. The second electrodes 20 of the unit cells positioned at the other end in the x-axis direction may be electrically connected to each other along the y-axis direction through the second electrode tab 400b.

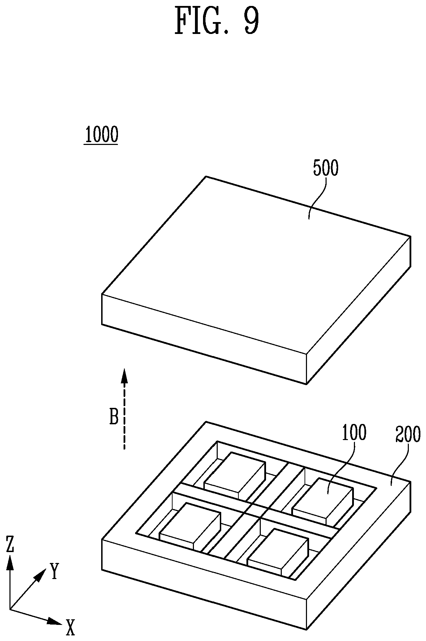

FIG. 9 is a diagram for explaining an upper cover of a bipolar battery according to an embodiment of the present disclosure.

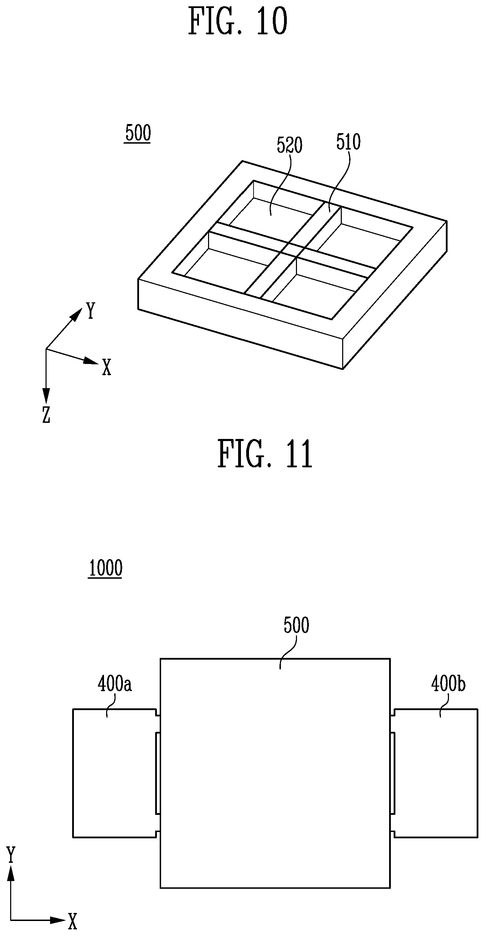

FIG. 10 is a perspective view of the upper cover of FIG. 9 as viewed in a B direction.

Referring to FIGS. 9 and 10, an upper cover 500 may be coupled to the frame 200 in which the unit cells 100 are disposed. The upper cover 500 may be disposed at one end of the unit cells 100 and the frame 200 in the z-axis direction, that is, at an upper end.

When the upper cover 500 is viewed in a B direction, an interior of the upper cover 500 may include an upper plate 520 and a second partition wall portion 510. The upper plate 520 may be disposed at one end of the unit cells 100 in the z-axis direction. In one embodiment, the upper plate 520 may be in contact with upper ends of the unit cells 100; however, the present disclosure is not limited thereto, and an empty space may exist between the upper plate 520 and the upper ends of the unit cells 100.

The second partition wall portion 510 may extend from the upper plate 520 in the z-axis direction, and more specifically, may extend downward from the upper plate 520. The second partition wall portion 510 may be connected to the first partition wall portion 210 included in the frame.

The upper cover 500 may include an insulating material. Accordingly, the upper cover 500 may electrically separate the unit cells 100. In an embodiment, the upper cover 500 may insulate the unit cells 100 adjacent to each other in the x-axis direction and the y-axis direction from each other. For example, when heights of the unit cells 100 in the z-axis direction are greater than a height of the frame 200 in the z-axis direction, portions of the unit cells 100 exceeding the height of the frame 200 may be insulated by the upper cover 500.

The upper cover 500 may include an elastic material. In one embodiment, pressure may be applied from the outside during operation of the bipolar battery, and the upper cover 500 including an elastic material may be appropriately compressed by the pressure from the outside and may normally separate the plurality of unit cells 100 without being damaged despite the external pressure.

The upper cover 500 may include, for example, one or more materials selected from the group consisting of polyurethane, natural rubber, spandex, butyl rubber (isobutylene isoprene rubber, IIR), fluoroelastomer, elastomer, ethylene-propylene rubber (EPR), styrene-butadiene rubber (SBR), chloroprene, elastin, epichlorohydrin rubber, nylon, terpene, isoprene rubber, polybutadiene, nitrile rubber, thermoplastic elastomer, silicone rubber, ethylene-propylene-diene rubber (EPDM), ethylene vinyl acetate (EVA), halogenated butyl rubber, neoprene, and copolymers thereof, but is not limited thereto. Alternatively, in another embodiment, the upper cover 500 may be a nonwoven fabric or a porous material, and may be, for example, a nonwoven fabric or sheet including one or more materials selected from the group consisting of an olefin-based porous material, glass fiber, and polyethylene.

FIG. 11 is a plan view of a bipolar battery with an upper cover coupled thereto according to one embodiment of the present disclosure, as viewed from above.

Referring to FIGS. 6 to 11, the bipolar battery 1000 may include a plurality of unit cells 100, and the unit cells 100 may be disposed in a space formed by coupling the frame 200 and the upper cover 500 to each other.

In an embodiment, the first electrodes 10 of the unit cells 100 positioned at one end in the x-axis direction may be electrically connected to each other along the y-axis direction through the first electrode tab 400a, and the second electrodes 20 of the unit cells 100 positioned at the other end in the x-axis direction may be electrically connected to each other along the second direction through the second electrode tab 400b.

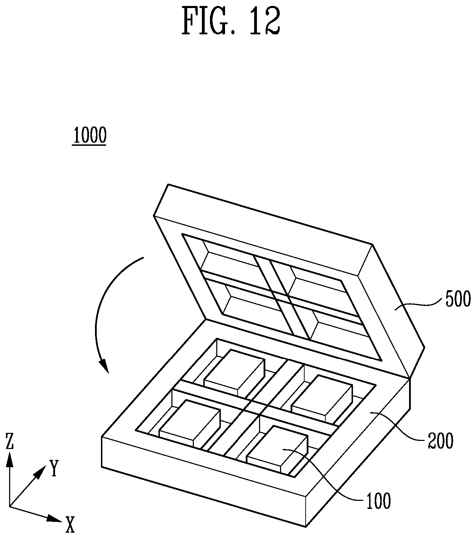

FIG. 12 is a perspective view for explaining a bipolar battery according to another embodiment of the present disclosure.

Referring to FIG. 12, a frame 200 and an upper cover 500 of a bipolar battery 1000 may be coupled in a clamshell type. That is, although FIG. 9 illustrates that the frame 200 and the upper cover 500 are separated from each other and then coupled to each other, the bipolar battery 1000 of FIG. 12 may include a fixing portion in which at least a portion of the frame 200 and the upper cover 500 are coupled and fixed to each other, and the frame 200 and the upper cover 500 may be opened and closed about the fixing portion as an axis.

The unit cells 100 may be disposed in a state in which the frame 200 and the upper cover 500 are opened, and after the unit cells 100 are disposed, the unit cells 100 may be sealed as the frame 200 and the upper cover 500 are closed.

When the frame 200 and the upper cover 500 formed in a clamshell type as shown in FIG. 12 are used, a sealing process can be reduced, thereby improving process efficiency, and energy efficiency of the bipolar battery 1000 can be improved.

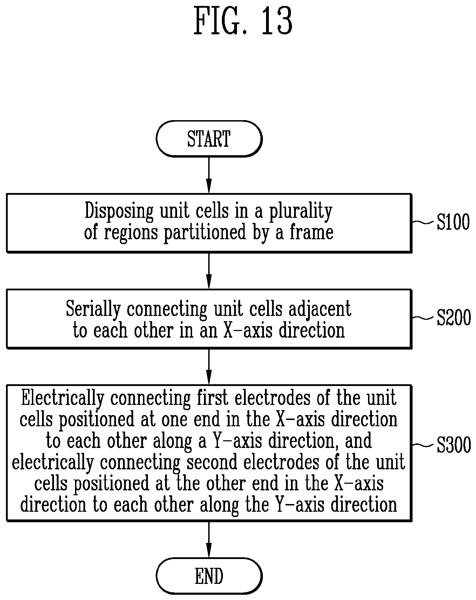

FIG. 13 is a flowchart for explaining a method of manufacturing a bipolar battery according to an embodiment of the present disclosure.

Referring to FIGS. 6, 7, and 13, in an S100 operation, unit cells 100 may be disposed in a plurality of regions partitioned by a frame 200. As the frame 200 extends in an x-axis direction and a y-axis direction, the frame 200 may partition the plurality of regions, and unit cells including a first electrode, a solid electrolyte, and a second electrode stacked in a z-axis direction may be disposed in the plurality of regions.

In one embodiment, before the unit cells 100 are disposed, a first conductive wire 300a may be disposed in advance on the frame 200, and the unit cells 100 may be disposed in the plurality of regions such that lower ends of the unit cells 100 are in contact with the first conductive wire 300a. Before the unit cells 100 are disposed, portions of the first conductive wire 300a that do not contact the unit cells 100 may be insulated. For example, an insulating tape may be attached around portions of the first conductive wire 300a that do not contact the unit cells 100.

In an S200 operation, unit cells 100 adjacent to each other in the x-axis direction may be serially connected. Specifically, the first electrode and the second electrode positioned at upper ends of the unit cells 100 adjacent to each other in the x-axis direction may be electrically connected to each other, or the first electrode and the second electrode positioned at lower ends of the unit cells 100 adjacent to each other in the x-axis direction may be electrically connected to each other.

In an embodiment, the first electrode and the second electrode positioned at the upper ends of the unit cells 100 adjacent to each other in the x-axis direction may be electrically connected to each other by an operation of disposing a second conductive wire 300b at the upper ends of the unit cells 100. In an embodiment, the first electrode and the second electrode positioned at the lower ends of the unit cells 100 adjacent to each other in the x-axis direction may be electrically connected to each other through the first conductive wire 300a disposed in advance on the frame 200.

In an S300 operation, the first electrodes of the unit cells 100 positioned at one end in the x-axis direction may be electrically connected to each other along the y-axis direction, and the second electrodes of the unit cells 100 positioned at the other end in the x-axis direction may be electrically connected to each other along the y-axis direction. The first electrodes of the unit cells 100 positioned at one end in the x-axis direction may be connected to each other through a first electrode tab 400a, and the first electrodes of the unit cells 100 positioned at the other end in the x-axis direction may be connected to each other through a second electrode tab 400b. Through the S300 operation, unit cell groups including unit cells 100 disposed along the x-axis direction may be connected in parallel with each other.

In addition, an operation of coupling an upper cover 500 to upper ends of the unit cells 100 and the frame 200 may be further performed. The upper cover 500 may seal the unit cells 100 disposed therein by being coupled to the frame 200.

### [Industrial Applicability]

The present disclosure can provide an electrode capable of preventing wrinkle formation and swelling phenomena and having excellent capacity retention and energy density. In addition, the present disclosure can provide a battery cell, a battery module, and a battery pack including the electrode, and can provide an electronic device including at least one of the battery cell, the battery module, and the battery pack.

## Claims

1. A bipolar battery comprising:
a frame extending in a first direction and a second direction and partitioning a plurality of regions; and
unit cells respectively disposed in the plurality of regions, each of the unit cells including a first electrode, a solid electrolyte, and a second electrode stacked in a third direction,
wherein unit cells adjacent to each other in the first direction are each arranged such that the first electrodes and the second electrodes are alternately positioned at both ends in the third direction,
wherein the unit cells adjacent to each other in the first direction are electrically connected to each other in series,
wherein the first electrodes of the unit cells positioned at one end in the first direction are electrically connected to each other along the second direction,
wherein the second electrodes of the unit cells positioned at the other end in the first direction are electrically connected to each other along the second direction, and
wherein the first direction, the second direction, and the third direction are orthogonal to each other.

2. The bipolar battery according to claim 1, further comprising:
a first electrode tab electrically connecting the first electrodes of the unit cells positioned at one end in the first direction to each other; and
a second electrode tab electrically connecting the second electrodes of the unit cells positioned at the other end in the first direction to each other.

3. The bipolar battery according to claim 1, wherein a length of the solid electrolyte in the first direction is longer than the first electrode and the second electrode.

4. The bipolar battery according to claim 1, wherein a height of the frame in the third direction is equal to or less than a height of the unit cells in the third direction.

5. The bipolar battery according to claim 1, wherein the unit cells adjacent to each other in the first direction have the first electrode and the second electrode at an upper end electrically connected to each other, or the first electrode and the second electrode at a lower end electrically connected to each other.

6. The bipolar battery according to claim 1, further comprising:
an upper cover disposed at one end of the unit cells and the frame in the third direction and including an insulating material.

7. The bipolar battery according to claim 6, wherein the frame includes:
a lower plate on which the unit cells are disposed on one surface in the third direction; and
a first partition wall portion extending from the lower plate in the third direction, partitioning the plurality of regions, and electrically insulating the unit cells from each other in the first direction and the second direction.

8. The bipolar battery according to claim 7, wherein the upper cover includes:
an upper plate disposed at one end of the unit cells in the third direction; and
a second partition wall portion extending from the upper plate in the third direction and connected to the first partition wall portion.

9. The bipolar battery according to claim 1, wherein, in each of the unit cells,
the first electrode and the second electrode are respectively positioned at both ends in the third direction, and
the solid electrolyte is positioned between the first electrode and the second electrode.

10. The bipolar battery according to claim 9, wherein the unit cell includes, between the first electrode and the second electrode,
one or more bipolar electrodes including
a bipolar current collector,
a first active material layer formed on one surface of the bipolar current collector, and
a second active material layer formed on another surface of the bipolar current collector.

11. The bipolar battery according to claim 1, wherein the frame includes an insulating material.

12. The bipolar battery according to claim 11, wherein the frame includes an elastic material.

13. The bipolar battery according to claim 12, wherein the frame includes one or more materials selected from the group consisting of polyurethane, natural rubber, spandex, butyl rubber (isobutylene isoprene rubber, IIR), fluoroelastomer, elastomer, ethylene-propylene rubber (EPR), styrene-butadiene rubber (SBR), chloroprene, elastin, epichlorohydrin rubber, nylon, terpene, isoprene rubber, polybutadiene, nitrile rubber, thermoplastic elastomer, silicone rubber, ethylene-propylene-diene rubber (EPDM), ethylene vinyl acetate (EVA), halogenated butyl rubber, neoprene, and copolymers thereof.

14. The bipolar battery according to claim 6, further comprising:
a fixing portion in which the frame and the upper cover are coupled and fixed.

15. The bipolar battery according to claim 14, wherein the frame and the upper cover are configured to be opened and closed relative to each other about the fixing portion as an axis.

16. A method of manufacturing a bipolar battery, comprising:
disposing unit cells in a plurality of regions partitioned by a frame extending in a first direction and a second direction;
serially connecting unit cells adjacent to each other in the first direction; and
electrically connecting first electrodes of the unit cells positioned at one end in the first direction to each other along the second direction, and electrically connecting second electrodes of the unit cells positioned at the other end in the first direction to each other along the second direction,
wherein the unit cells include a first electrode, a solid electrolyte, and a second electrode stacked in a third direction,
wherein the unit cells adjacent to each other in the first direction are each arranged such that the first electrodes and the second electrodes are alternately positioned at both ends in the third direction, and
wherein the first direction, the second direction, and the third direction are orthogonal to each other.

17. The method of manufacturing a bipolar battery according to claim 16, wherein the step of serially connecting the unit cells adjacent to each other in the first direction includes:
electrically connecting the first electrode and the second electrode positioned at an upper end of the unit cells adjacent to each other in the first direction to each other; or
electrically connecting the first electrode and the second electrode positioned at a lower end of the unit cells adjacent to each other in the first direction to each other.

18. The method of manufacturing a bipolar battery according to claim 16, further comprising:
coupling an upper cover including an insulating material to one end of the unit cells and the frame in the third direction.

19. The method of manufacturing a bipolar battery according to claim 16, wherein the step of disposing the unit cells includes:
disposing a conductive wire on the frame; and
disposing the unit cells in the plurality of regions such that one end of the unit cells in the third direction is in contact with the conductive wire.

20. The method of manufacturing a bipolar battery according to claim 19, wherein the step of disposing the unit cells further includes:
insulating portions of the conductive wire that do not contact the unit cells.
